# EUROPÄISCHE PATENTSCHRIFT

(11) **EP 3 497 333 B1**
(45) Veröffentlichungstag und Bekanntmachung des Hinweises auf die Patenterteilung: **04.03.2020**
(21) Anmeldenummer: 17809180.7
(22) Anmeldetag: 07.08.2017
(51) Int. Cl.: F04B 53/10, F16K 15/02, F16K 15/06, F16K 15/00, F16K 31/06

(54) **VENTIL, INSBESONDERE EIN PUMPENVENTIL ZUR FÖRDERUNG ABRASIVER UND/ODER HETEROGENER MISCHUNGEN**
VALVE, IN PARTICULAR A PUMP VALVE FOR PUMPING ABRASIVE AND/OR HETEROGENEOUS MIXTURES
SOUPAPE, EN PARTICULIER UNE SOUPAPE DE POMPE POUR LE POMPAGE DE MÉLANGES ABRASIFS ET/OU HÉTÉROGÈNES

(30) Priorität: 12.08.2016 DE 102016115025
(43) Veröffentlichungstag der Anmeldung: 19.06.2019
(73) Patentinhaber: Feluwa Pumpen GmbH, 54570 Mürlenbach (DE)
(72) Erfinder: NÄGEL, Daniel, 54550 Daun (DE); GÄNSL, Rudolf, 67304 Eisenberg (DE); SCHLÜCKER, Eberhard, 74182 Obersulm (DE)
(74) Vertreter: Patentanwaltskanzlei Vièl & Wieske PartGmbB
(86) Internationale Anmeldenummer: PCT/DE2017/100667
(87) Internationale Veröffentlichungsnummer: WO 2018/028749

(56) Entgegenhaltungen:
- DE-A1- 2 303 450
- DE-A1- 2 739 085
- DE-A1-102007 016 736
- DE-B- 1 216 847
- US-A- 5 374 029

## Beschreibung

Die vorliegende Erfindung betrifft ein Ventil, ein Pumpenventil sowie eine Pumpe mit wenigstens einem Pumpenventil.

Selbsttätige, druckgesteuerte, oder fluidgesteuerte Ventile werden in großer Vielfalt in verschiedenen Branchen eingesetzt.

Beispielsweise offenbaren die DE 10 2007 016 898 A1, die DE 10 2015 200 937 A1, die GB 558 201 A, die US 2 355 862 A und die JP H03-33571 A Ventile, mit einem Dichtsitz, mit einem den Dichtsitz verschließenden Ventilkörper und einer einem elastischen Element, welches den Ventilkörper radial gegen den Dichtsitz verspannt.

Der häufigste Bereich ist die Prozesstechnik und dort insbesondere die Fluidventile in oszillierenden Verdrängerpumpen. Wie eine langjährige Erfahrung zeigt, ist die Schwachstelle solcher Ventile der Schließvorgang. Soll der Schließkörper genau auf die Ventilsitzgeometrie passen, so muss der Schließkörper geführt werden. Dies stellt aber große Anforderungen an die Konstruktion, weil die Führung nicht zu eng und nicht zu weit sein darf. Ist sie zu eng, klemmt das Ventil und ist sie zu weit, werden Probleme beim Schließen erzeugt.

Diese Probleme sind:
1. Der Schließkörper trifft zuerst auf einer Seite auf und wird durch den bereits anliegenden Druck gebogen und die Führung ggf. verbogen, und die Ventilstange (auch Führungsstange genannt) bricht.
2. Ausgehend von einem einseitigen Auftreffen, kann der Schließkörper auch in seine stabile Endlage gedrückt werden und dabei Reibverschleiß verursachen. Das Ventil wird dadurch undicht.
3. Ebenfalls ausgehend vom einseitigen Auftreffen kann die andere Seite stark beschleunigt werden und daher mit großer Schließenergie auf den Sitz auftreffen und diesen verschleißen.

Unter diesen Problemen leiden die meisten eingesetzten Ventile, sofern sie geführt werden müssen und eine gewisse Größe (z. B. > 10 mm Nennweite) besitzen. Jedoch tritt das Problem verstärkt auf, wenn schwierige Fördergüter gepumpt werden müssen. So entsteht z.B. bei abrasiven Feststoff-Flüssigkeitsgemischen oder Mehrphasengemischen bis hin zu Stäuben vielfach massiver Verschleiß, der auch die Führung betrifft und damit in zweifacher Richtung schädlich wirkt, nämlich zum einen, dass sich der Führungsspalt weitet und zum anderen, dass der Dichtbereich ausgewaschen wird oder extrem abrasiv bearbeitet wird. Letzteres führt bis hin zum Strahlverschleiß.

Die Führung von Schließkörpern in Ventilen ist demnach ein großes ungelöstes Problem, das für erhebliche Kosten und oftmals häufige Ausfälle von Ventilen und damit Pumpen in der Pumpen- und Prozessindustrie sorgt.

Aus der US 5,374,029 A ist ein Solenoid-Durchflußventil bekannt, das einen Ventilkörper mit einer darin angeordneten Kammer und ersten und zweiten Durchflußöffnungen aufweist.
Es ist daher Aufgabe der Erfindung, ein Ventil, insbesondere ein Pumpenventil, und eine Pumpe mit wenigstens einem Pumpenventil, bereitzustellen, welche die oben aufgeführten Nachteile nicht aufweisen.

Die Aufgabe der Erfindung wird durch ein Ventil, umfassend ein Ventilgehäuse, in dem ein Ventilsitz und ein axial relativ zu dem Ventilsitz beweglicher Schließkörper vorgesehen sind, wobei der Schließkörper über wenigstens ein aus flexiblem Material bestehendes Element radial mit dem Ventilgehäuse verbunden ist, wobei der Schließkörper an wenigstens zwei axial voneinander beabstandeten Einspannpunkten über jeweils wenigstens ein aus flexiblem Material bestehendes Element radial mit dem Ventilgehäuse verbunden ist, dadurch gelöst, dass der Schließkörper an wenigstens zwei axial voneinander beabstandeten Einspannpunkten über jeweils wenigstens ein aus flexiblem Material bestehendes Element radial mit dem Ventilgehäuse verbunden ist, dass der Schließkörper aus einem Kegel, einer Platte oder einem Kugelsegment sowie einer axial mit dem Kegel, der Platte oder dem Kugelsegment fest verbundenen Ventilstange besteht und dass einer der wenigstens zwei axial voneinander beabstandeten Einspannpunkte axial oberhalb und ein weiterer der wenigstens zwei axial voneinander beabstandeten Einspannpunkte axial unterhalb des Ventilsitzes in dem Ventilgehäuse angeordnet ist.

Durch diese Ausgestaltung der Erfindung werden eine kompaktere Ventilgeometrie, damit kleinere Ventilgrößen und damit weniger Materialkosten erreicht.

Es ist zu der Erfindung gehörig, dass das erfindungsgemäße Ventil sowohl für den Upflow-Betrieb als auch für den Downflow-Betrieb einer Pumpe verwendet werden kann. Die Pumpe kann gemäß den Anforderungen mit einem oder mehreren Ventilen ausgerüstet sein.

Im Downflow-Betrieb (ein Fluid wird von oben nach unten gefördert) ist der Schließkörper (beispielsweise eines Saug- und/oder Druckventils) axial unterhalb des Ventilsitzes angeordnet und zugleich relativ zu dem Ventilsitz beweglich. Da der Schließkörper über wenigstens ein aus flexiblem Material bestehendes Elemente radial mit dem Ventilgehäuse verbunden ist, kann der Schließkörper sowohl eine Öffnungsstellung (Schließkörper ist axial entfernt vom Ventilsitz angeordnet, wodurch ein Fluiddurchfluss durch das Ventil erreicht wird, als auch eine Schließstellung (Schließkörper verschließt den Ventilsitz, wodurch ein Fluiddurchfluss verhindert wird) einnehmen.

Im Upflow-Betrieb (ein Fluid wird von unten nach oben gepumpt) ist der Schließkörper axial oberhalb des Ventilsitzes angeordnet und zugleich relativ zu dem Ventilsitz beweglich. Da der Schließkörper über wenigstens ein aus flexiblem Material bestehendes Element radial mit dem Ventilgehäuse verbunden ist, kann der Schließkörper sowohl eine Öffnungsstellung (Schließkörper ist axial entfernt vom Ventilsitz angeordnet, wodurch ein Fluiddurchfluss durch das Ventil erreicht wird), als auch eine Schließstellung (Schließkörper verschließt den Ventilsitz, wodurch ein Fluiddurchfluss verhindert wird) einnehmen.

Fluide sind jegliche Gase, Dämpfe, Stäube und Flüssigkeiten. Die Fluide können aggressiv, abrassiv, toxisch oder eine Kombination hiervon sein.

Das aus elastischem oder flexiblem Material bestehende Element ist vorzugsweise ein längliches Element (länger als breit) mit zwei Endbereichen. Die Endbereiche können als Einspannbereiche ausgebildet sein, d.h. sie können am Ventilgehäuse verspannt sein. Ebenso können die Endbereiche über kraftschlüssige Verbindungen mit dem Ventilgehäuse verbunden sein. Es ist vorgesehen, dass jeweils mittig an dem wenigstens einen - aus elastischem oder flexiblem Material bestehenden - Element der Schließkörper angeordnet ist. Hierbei ist vorgesehen, dass der Schließkörper fest mit dem wenigstens einen Element verbunden ist. Beispielsweise kann die Verbindung durch eine kraftschlüssige Verbindung (Schrauben, Nieten,...) erreicht werden. Ebenso ist vorstellbar, dass der Schließkörper wenigstens eine Durchgangsbohrung aufweist, durch die das längliche Element einfach oder mehrfach geführt ist und damit formschlüssig verbunden ist. Ebenso kann die Verbindung form- und kraftschlüssig sein. Weiterhin ist vorstellbar, dass das Element eine Bohrung aufweist, in die der Schließkörper eingeführt ist. Hierbei ist ebenfalls vorgesehen, dass Verbindung form- und kraftschlüssig sein kann.

Durch die Ausgestaltung, dass der Schließkörper an wenigstens zwei axial voneinander beabstandeten Einspannpunkten über jeweils wenigstens ein aus flexiblem Material bestehendes Element radial mit dem Ventilgehäuse verbunden ist, wird erreicht, dass der Schließkörper an zwei axial voneinander beabstandeten Punkten geführt wird. Diese Ausgestaltung ist insbesondere vorteilhaft, um eine genauere axiale Führung zu bewirken.

Es ist ebenfalls im Rahmen der Erfindung vorgesehen, dass in dem Ventilgehäuse ein Einsatz, der einen Fluiddurchfluss erlaubt, angeordnet ist. Der Einsatz kann beispielsweise als Zylinder ausgebildet sein. Die Endbereiche des wenigstens einen aus elastischem oder flexiblem Material bestehenden Elementes können beispielsweise mit einem Endbereich mit Mitteln am Einsatz verspannt sein. Ebenso können die Endbereiche über kraftschlüssige Verbindungen und dem Einsatz verbunden sein.

Das wenigstens eine Element kann beispielsweise als Speiche, Metallmembrane oder Feder, insbesondere Spiralfeder, Blechfeder oder Segmentfeder, ausgebildet sein. Das Element kann im Querschnitt beliebig ausgestaltet sein, vorzugsweise jedoch derart, dass es eine optimierte Strömung erlaubt. Es ist weiterhin vorteilhaft vorgesehen, dass die Membranform derart ausgebildet ist, dass die Kennlinie zur Reduktion des Druckverlustes in der Öffnungsstellung einstellbar ist. Durch diese Ausgestaltung wird erreicht, dass der Öffnungsvorgang eine geringe bis keine Druckverlusterhöhung erzeugt, wodurch vorteilhaft Energie eingespart wird.

Es ist vorteilhaft im Rahmen der Erfindung vorgesehen, dass der Schließkörper über wenigstens zwei, vorzugsweise wenigstens drei, aus flexiblem Material bestehende Elemente radial mit dem Ventilgehäuse verbunden ist.

Die aus elastischem oder flexiblem Material bestehenden Elemente sind vorzugsweise längliche Elemente (länger als breit) mit zwei Endbereichen. Die Endbereiche können als Einspannbereiche ausgebildet sein, d.h. sie können beispielsweise mit einem Endbereich mit Mitteln am Ventilgehäuse und dem anderen Endbereich mit Mitteln am Schließkörper verspannt sein. Ebenso können die beiden Endbereiche über kraftschlüssige Verbindungen mit dem Schließkörper und dem Ventilgehäuse verbunden sein.

Die wenigstens zwei aus flexiblem Material bestehenden Elemente, die den Schließkörper radial mit dem Ventilgehäuse verbinden, sind derart ausgebildet, dass sie den Schließkörper entlang der axialen Achse führen können. Vorzugsweise sind die jeweiligen einen Endbereiche der wenigstens zwei aus flexiblem bzw. biegsamem Material bestehenden Elemente gleichmäßig über den Umfang verteilt an dem Schließkörper befestigt. Die jeweiligen anderen Endbereiche der wenigstens zwei aus flexiblem bzw. biegsamem Material bestehenden Elemente sind radial an dem Ventilgehäuse (oder dem Einsatz) befestigt.

Es ist im Rahmen der Erfindung vorgesehen, dass im Falle, dass in dem Ventilgehäuse ein Einsatz angeordnet ist, ein Endbereich des aus elastischem oder flexiblem Material bestehenden Elementes beispielsweise mit Mitteln am Einsatz und dem anderen Endbereich mit Mitteln am Schließkörper verspannt sein kann. Ebenso können die Endbereiche über kraftschlüssige Verbindungen mit einem Endbereich am dem Schließkörper und dem anderen Endbereich am Einsatz verbunden sein.

Im Falle, dass der Schließkörper über genau drei aus flexiblem Material bestehende Elemente radial mit dem Ventilgehäuse verbunden ist, ist vorgesehen, dass diese ebenfalls über den Umfang des Ventilgehäuses gleichmäßig verteilt angeordnet sind, nämlich jeweils im Winkel von 120° zueinander.

Im Falle, dass der Schließkörper über genau vier aus flexiblem Material bestehende Elemente radial mit dem Ventilgehäuse verbunden ist, ist vorgesehen, dass diese ebenfalls über den Umfang des Ventilgehäuses gleichmäßig verteilt angeordnet sind, nämlich jeweils im Winkel von 90° zueinander.

Fest verbunden bedeutet in diesem Zusammenhang, dass die Ventilstange und der Kegel oder die Ventilstange und die Platte oder die Ventilstange und das Kugelsegment durch materialverbindende Verfahren (z.B. Schweißen, ...) oder durch kraftschlüssige Verfahren (Verschraubung, ...) miteinander verbunden sind. Ebenso ist vorstellbar, dass die Ventilstange und der Kegel oder die Ventilstange und die Platte oder die Ventilstange und das Kugelsegment einteilig hergestellt wurden (durch ein Gießverfahren, durch Sintern, durch GRP-Formen, durch 3D-Druck,...).

Für die Ausgestaltung, dass der Schließkörper über wenigstens zwei aus flexiblem Material bestehende Elemente mit dem Ventilgehäuse verbunden ist, ist zu der Erfindung gehörig, dass die aus flexiblem Material bestehenden Elemente radial an der Ventilstange des Schließkörpers angeordnet sind und radial mit dem Ventilgehäuse verbunden sind.

Weiterhin ist vorgesehen, dass der Schließkörper als eine Kugel ausgebildet ist.

Bei dieser Ausgestaltung kann die Kugel an dem jeweiligen axial beabstandeten Einspannpunkt eine Durchbohrung aufweisen, durch die das jeweilige wenigstens eine, aus flexiblem Material bestehende Element geführt ist. Hierbei ist vorgesehen, dass die Kugel fest mit dem Element verbunden ist und mittig an dem aus flexiblem Material bestehenden Element angeordnet ist.

Es ist vorstellbar, dass das eine aus flexiblem Material bestehende Element einen Bereich aufweist, der wenigsten einer Teilaußenkontur der Kugel entspricht. Die Kugel kann dann in diesem Bereich formschlüssig angeordnet sein und über ein kraftschlüssiges Verfahren fest mit dem Element verbunden sein. Es ist hierbei vorgesehen, dass der Bereich, der wenigsten einer Teilaußenkontur der Kugel entspricht, mittig an dem aus flexiblem Material bestehenden Element ausgebildet ist.

Ebenso ist vorstellbar, dass die Kugel durch wenigstens zwei aus flexiblem Material bestehende Elemente radial mit dem Ventilgehäuse verbunden ist. Bei dieser Ausgestaltung können die aus flexiblem Material bestehenden Elemente radial an der Kugel (an zwei horizontalen Umfangpunkten des Kugeldurchmessers) und radial mit dem Ventilgehäuse verbunden sein.

Eine weitere vorteilhafte Ausgestaltung der Erfindung sieht vor, dass der Schließkörper an wenigstens zwei axial voneinander beabstandeten Einspannpunkten über jeweils wenigstens zwei, vorzugsweise drei, aus flexiblem Material bestehende Elemente radial mit dem Ventilgehäuse verbunden ist.

Für die Ausgestaltung, dass der Schließkörper aus einem Kegel, einer Platte oder einem Kugelsegment sowie einer axial mit dem Kegel, der Platte oder dem Kugelsegment fest verbundenen Ventilstange besteht, ist weiterhin erfindungsgemäß vorgesehen, dass die wenigstens zwei axial voneinander beabstandeten Einspannpunkte axial oberhalb oder axial unterhalb des Ventilsitzes in dem Ventilgehäuse angeordnet sind.

Diese Ausgestaltung hat den Vorteil, dass das Ventil für eine Durchströmung sowohl von unten nach oben (Upflow) als auch von oben nach unten (Downflow) einsetzbar ist.

Ebenfalls sieht diese Ausgestaltung vorteilhaft vor, dass auf metallische Führungen komplett verzichtet werden kann. Die metallischen Führungen gehören zu den Hauptverschließteilen eines Förderventils. Somit kann die Lebensdauer des Ventils gesteigert werden.

Ebenfalls kann diese Ausgestaltung des Ventils sowohl für den Upflow-Betrieb als auch für den Downflow-Betrieb eingesetzt werden.

Es ist im Rahmen der Erfindung vorgesehen, dass das flexible Material des wenigstens einen Elementes aus einem flexiblem Material besteht, ausgewählt aus der Gruppe bestehend aus Metallblechen, Elastomerformteilen, Elastomerflachmaterialien, Plastomeren und Polytetrafluorethylen (PTFE), und/oder aus einem bei Energiebeaufschlagung kontrahierenden Material besteht.

Wird das flexible Material als aus einem bei Energiebeaufschlagung kontrahierenden oder expandierenden Material (i.S. eines künstlichen Muskels) ausgeführt, so kann damit das Ventil mit elektrischer Energie geschlossen und geöffnet werden. Die Form des flexiblen Materials wird den Möglichkeiten der aktuellen Technik zu künstlichen Muskeln angepasst. Erste Ausführungsart sind die schon bekannten Stapelaktoren. Aber auch andere können zum Einsatz kommen. Die Formen sind grundsätzlich den anderen Ausführungen in dieser Beschreibung ähnlich.

Eine Ausgestaltung der Erfindung sieht vor, dass das flexible Material elastisch ist.

Im Rahmen der Erfindung ist für die Ausgestaltung, bei der wenigstens zwei aus flexiblem Material bestehende Elemente vorgesehen sind, weiterhin vorteilhaft vorgesehen, dass die aus flexiblem Material bestehenden Elemente einteilig hergestellt sind.

Beispielsweise könnten die Elemente wie Speichen eines Wagenrades zwischen einem Innenring und dem Ventilgehäuse angeordnet sein. Der Innenring, der mit dem Schließkörper verbunden ist, umfasst dann die einen Endbereiche der Elemente und die anderen Endbereiche sind mit dem Einsatz oder direkt mit dem Ventilgehäuse verbunden. Die Verbindungen sind entweder endfest oder lösbar ausgebildet.

Die Elemente könnten aber auch wie Speichen eines Wagenrades zwischen einem Innenring und einem Außenring angeordnet sein. Der Innenring, der mit dem Schließkörper verbunden ist, umfasst dann die einen Endbereiche der Elemente und die anderen Endbereiche sind mit dem Außenring verbunden, wobei der Außenring mit dem Einsatz oder direkt mit dem Ventilgehäuse verbunden ist. Die Verbindungen sind entweder endfest oder lösbar ausgebildet.

Eine weitere Ausgestaltung der Erfindung sieht vor, dass der Schließkörper und das wenigstens eine aus flexiblem Material bestehende Element einteilig hergestellt sind.

Diese Ausgestaltung wird durch beispielsweise Gießen, Spritzgießen, Schneiden, Stanzen, Sintern, GRP-Formen oder Drucken (3D-Drucken) erreicht.

Zudem ist für alle vorgenannten Ausgestaltungen vorgesehen, dass das Ventilgehäuse, der optionale Einsatz, der Ventilsitz und der Schließkörper mit/ohne Ventilstange aus hydroabrasionbeständigen Materialien, ausgewählt aus den Gruppen der Metalle, Elastomerformteile, Elastomerflachmaterialien, Plastomere und Polytetrafluorethylen (PTFE) hergestellt sind. Es ist hierbei erfindungsgemäß vorgesehen, dass die Materialien der Gruppe der Metalle einer nachfolgenden Oberflächenbehandlung unterzogen werden können. Bekannte Oberflächenbehandlungen können durch Beschichtungen oder Wärmebehandlungen erfolgen.

Es ist im Rahmen der Erfindung vorgesehen, dass das Ventil ein Pumpenventil, insbesondere ein Pumpenventil zur Förderung abrasiver und/oder heterogener Mischungen ist.

Die Aufgabe wird dementsprechend weiterhin durch eine Pumpe gelöst, die ein erfindungsgemäßes Pumpenventil, insbesondere ein Pumpenventil zur Förderung abrasiver und/oder heterogener Mischungen, aufweist.

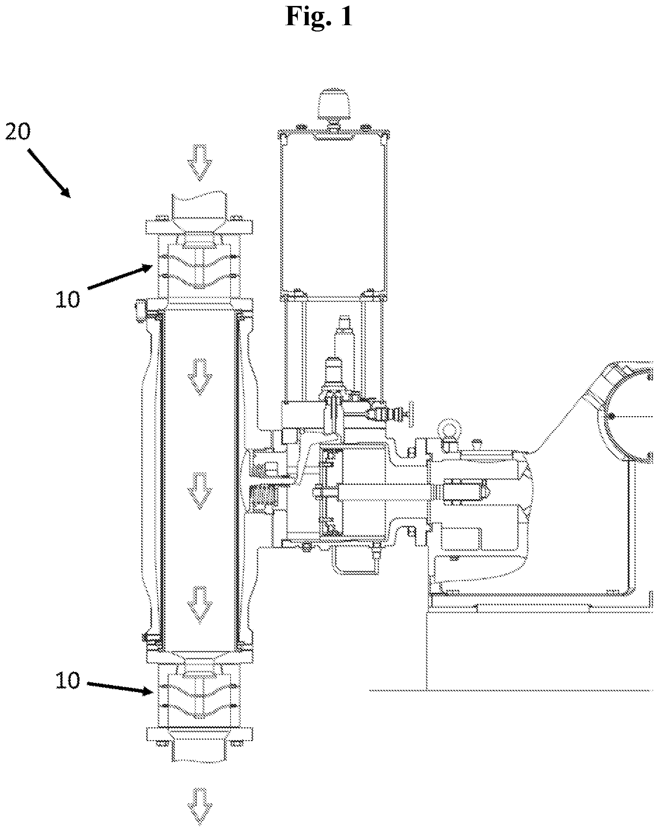

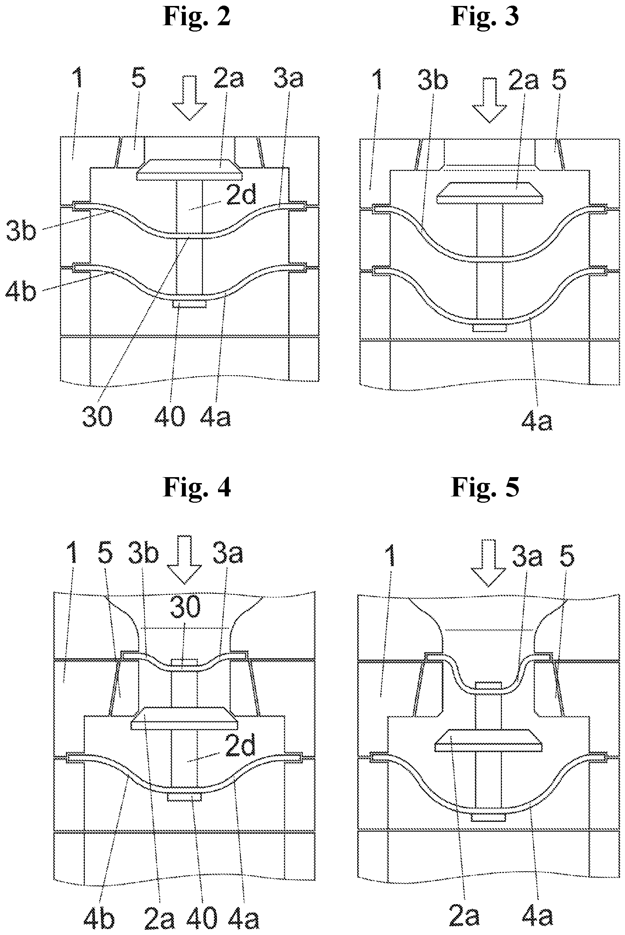

Nachfolgend wird die Erfindung anhand von schematischen Zeichnungen, nämlich anhand von Pumpen und Pumpenventilen, näher erläutert. Es wird ausdrücklich darauf hingewiesen, dass die gezeigten Pumpenventile Ausführungsbeispiele sind und die gezeigten Ventile für jegliche andere Anwendungen einsetzbar sind. Es zeigen
- Fig. 1: einen Ausschnitt einer kompletten Pumpe mit Getriebe mit einem darin eingebauten erfindungsgemäßen Ventil gemäß den Fig. 2 bis 3, wobei das Ventil ein Downflow-Pumpenventil ist,
- Fig. 2: ein Downflow-Pumpenventil im geschlossenen Zustand, wobei der Schließkörper aus einem Kegel sowie einer axial mit dem Kegel fest verbundenen Ventilstange besteht, wobei der Schließkörper an wenigstens zwei axial voneinander beabstandeten Einspannpunkten, die unterhalb des Ventilsitzes angeordnet sind, über jeweils wenigstens zwei aus flexiblem Material bestehende Elemente radial mit dem Ventilgehäuse verbunden ist,
- Fig. 3: ein Downflow-Pumpenventil im geöffneten Zustand, wobei der Schließkörper aus einer Kegel sowie einer axial mit der Kegel fest verbundenen Ventilstange besteht, wobei der Schließkörper an wenigstens zwei axial voneinander beabstandeten Einspannpunkten, die unterhalb des Ventilsitzes angeordnet sind, über jeweils wenigstens zwei aus flexiblem Material bestehende Elemente radial mit dem Ventilgehäuse verbunden ist,
- Fig. 4: ein Downflow-Pumpenventil im geschlossenen Zustand, wobei der Schließkörper aus einem Kegel sowie einer axial mit dem Kegel fest verbundenen Ventilstange besteht, wobei der Schließkörper an wenigstens zwei axial voneinander beabstandeten Einspannpunkten über jeweils wenigstens zwei aus flexiblem Material bestehende Elemente radial mit dem Ventilgehäuse verbunden ist, wobei ein Einspannpunkt unterhalb und ein Einspannpunkt oberhalb des Ventilsitzes angeordnet ist,
- Fig. 5: ein Downflow-Pumpenventil im geöffneten Zustand, wobei der Schließkörper aus einem Kegel sowie einer axial mit dem Kegel fest verbundenen Ventilstange besteht, wobei der Schließkörper an wenigstens zwei axial voneinander beabstandeten Einspannpunkten über jeweils wenigstens zwei aus flexiblem Material bestehende Elemente radial mit dem Ventilgehäuse verbunden ist, wobei ein Einspannpunkt unterhalb und ein Einspannpunkt oberhalb des Ventilsitzes angeordnet ist,

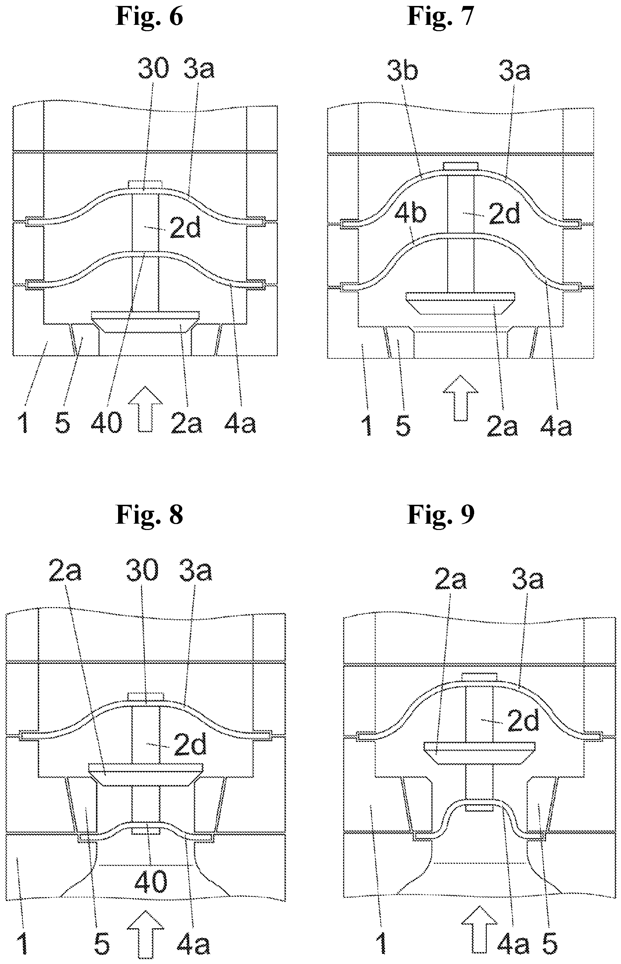

- Fig. 6: ein Upflow-Pumpenventil im geschlossenen Zustand, wobei der Schließkörper aus einem Kegel sowie einer axial mit dem Kegel fest verbundenen Ventilstange besteht, wobei der Schließkörper an wenigstens zwei axial voneinander beabstandeten Einspannpunkten, oberhalb des Ventilsitzes angeordnet sind, über jeweils wenigstens zwei aus flexiblem Material bestehende Elemente radial mit dem Ventilgehäuse verbunden ist,
- Fig. 7: ein Upflow-Pumpenventil im geöffneten Zustand, wobei der Schließkörper aus einem Kegel sowie einer axial mit dem Kegel fest verbundenen Ventilstange besteht, wobei der Schließkörper an wenigstens zwei axial voneinander beabstandeten Einspannpunkten, die oberhalb des Ventilsitzes angeordnet sind, über jeweils wenigstens zwei aus flexiblem Material bestehende Elemente radial mit dem Ventilgehäuse verbunden ist,
- Fig. 8: ein Upflow-Pumpenventil im geschlossenen Zustand, wobei der Schließkörper aus einem Kegel sowie einer axial mit dem Kegel fest verbundenen Ventilstange besteht, wobei der Schließkörper an wenigstens zwei axial voneinander beabstandeten Einspannpunkten über jeweils wenigstens zwei aus flexiblem Material bestehende Elemente radial mit dem Ventilgehäuse verbunden ist, wobei ein Einspannpunkt unterhalb und ein Einspannpunkt oberhalb des Ventilsitzes angeordnet ist,
- Fig. 9: ein Upflow-Pumpenventil im geöffneten Zustand, wobei der Schließkörper aus einem Kegel sowie einer axial mit dem Kegel fest verbundenen Ventilstange besteht, wobei der Schließkörper an wenigstens zwei axial voneinander beabstandeten Einspannpunkten über jeweils wenigstens zwei aus flexiblem Material bestehende Elemente radial mit dem Ventilgehäuse verbunden ist, wobei ein Einspannpunkt unterhalb und ein Einspannpunkt oberhalb des Ventilsitzes angeordnet ist,

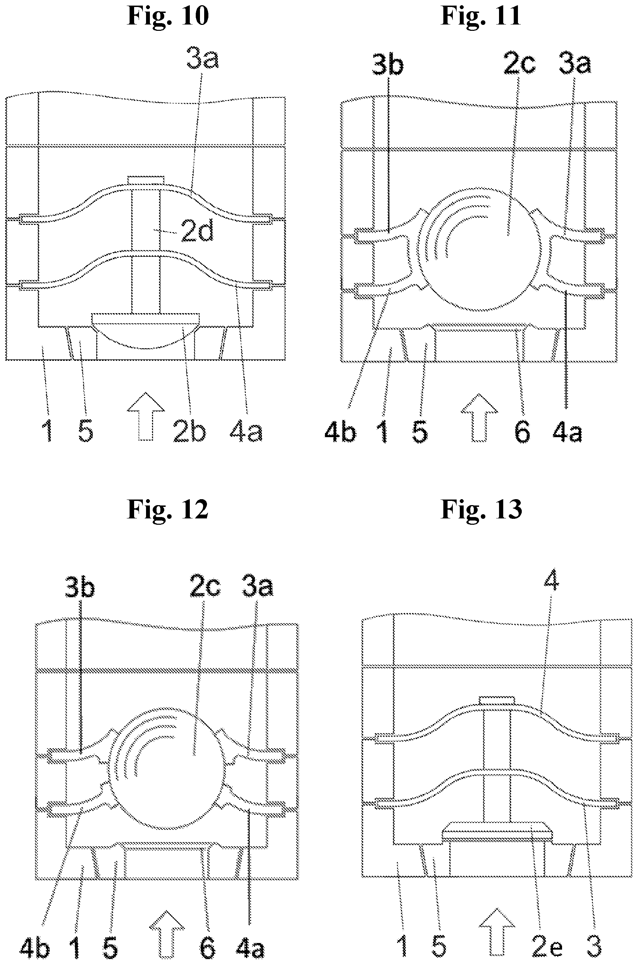

- Fig. 10: ein Upflow-Pumpenventil im geschlossenen Zustand, wobei der Schließkörper aus einem Kugelsegment sowie einem axial mit dem Kugelsegment fest verbundenen Ventilstange besteht,
- Fig. 11: ein Upflow-Pumpenventil im geöffneten Zustand, wobei der Schließkörper eine Kugel ist,
- Fig. 12: ein weiteres Upflow-Pumpenventil im geöffneten Zustand, wobei der Schließkörper eine Kugel ist,
- Fig. 13: ein Upflow-Pumpenventil im geschlossenen Zustand, wobei der Schließkörper aus einer Platte sowie einer axial mit der Platte fest verbundenen Ventilstange besteht,

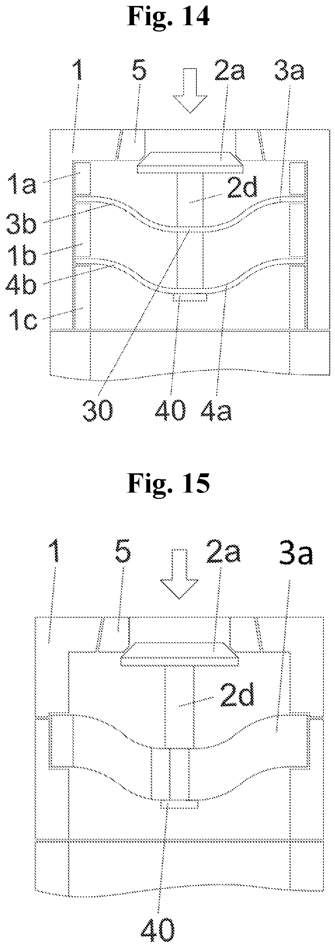

- Fig. 14: ein Downflow-Pumpenventil im geschlossenen Zustand, wobei der Schließkörper aus einem Kegel sowie einer axial mit dem Kegel fest verbundenen Ventilstange besteht, wobei der Schließkörper an wenigstens zwei axial voneinander beabstandeten Einspannpunkten, die unterhalb des Ventilsitzes angeordnet sind, über jeweils wenigstens zwei aus flexiblem Material bestehende Elemente radial mit einem Einsatz, der in dem Ventilgehäuse unbeweglich angeordnet ist, verbunden ist,
- Fig. 15: einen Schließkörper, der durch ein aus flexiblem Material bestehendes Element mit dem Ventilgehäuse verbunden ist, wobei die beiden Endbereiche des aus flexiblem Material bestehenden Elementes mit dem Ventilgehäuse verbunden sind,

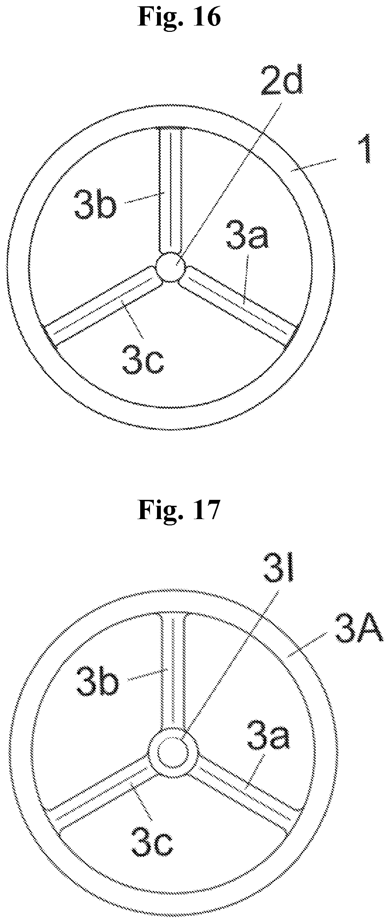

- Fig. 16: die aus flexiblem Material bestehende Elemente in Draufsicht, wobei die Elemente radial den Schließkörper mit dem Ventilgehäuse verbinden,
- Fig. 17: die aus flexiblem Material bestehende Elemente in Draufsicht, wobei die Elemente fest zwischen einem Innenring und einem Außenring angeordnet sind und insgesamt (Elemente, Innenring, Außenring) radial den Schließkörper mit dem Ventilgehäuse verbinden.

In allen Figuren zeigt der Pfeil die Pumprichtung der Pumpen mit den erfindungsgemäßen Ventilen an, wobei die Ventile für eine Durchströmung von unten nach oben (Upflow) als auch eine Durchströmung von oben nach unten (Downflow) verwendbar sind.

Fig. 1 zeigt eine komplette Pumpe (20) mit Getriebe sowie zwei darin eingebauten erfindungsgemäßen Downflow-Ventilen (10). Die Downflow-Ventile (10) sind Downflow-Pumpenventile.

Die erfindungsgemäßen Downflow-Pumpenventile aus Fig. 1 sind wie aus den Fig. 2 und 3 ersichtlich aufgebaut.

Das Ventil (10) umfasst ein Ventilgehäuse (1), in dem ein Ventilsitz (5) und ein axial relativ zu dem Ventilsitz (5) beweglicher Schließkörper vorgesehen sind. Der Schließkörper besteht aus einem Kegel (2a) sowie einer axial mit dem Kegel (2a) fest verbundenen Ventilstange (2d). Der Schließkörper (2a, 2d) ist an wenigstens zwei axial voneinander beabstandeten Einspannpunkten (30, 40) über jeweils drei aus flexiblem Material bestehende Elemente (3a, 3b, 4a, 4b (3c und 4c nicht gezeigt)) radial mit dem Ventilgehäuse (1) verbunden. Die zwei axial voneinander beabstandeten Einspannpunkte (30, 40) sind axial unterhalb des Ventilsitzes (5) in dem Ventilgehäuse (1) angeordnet. In Fig. 2 ist das Ventil in geschlossener Stellung gezeigt und in Fig. 3 in geöffneter Stellung.

Eine andere Ausgestaltung für Downflow-Pumpenventile ist wie aus den Fig. 4 und 5 ersichtlich aufgebaut.

Das Ventil (10) umfasst ein Ventilgehäuse (1), in dem ein Ventilsitz (5) und ein axial relativ zu dem Ventilsitz (5) beweglicher Schließkörper vorgesehen sind. Der Schließkörper besteht aus einem Kegel (2a) sowie einer axial mit dem Kegel (2a) fest verbundenen Ventilstange (2d). Der Schließkörper (2a, 2d) ist an wenigstens zwei axial voneinander beabstandeten Einspannpunkten (30, 40) über jeweils drei aus flexiblem Material bestehende Elemente (3a, 3b, 4a, 4b (3c und 4c nicht gezeigt)) radial mit dem Ventilgehäuse (1) verbunden. Die zwei axial voneinander beabstandeten Einspannpunkte (30, 40) sind axial derart an der Ventilstange (2d) angeordnet, dass einer der Einspannpunkte (30) oberhalb des Ventilsitzes (5) radial mit dem Ventilgehäuse (1) verbunden ist und der andere Einspannpunkt (40) unterhalb des Ventilsitzes (5) radial mit dem Ventilgehäuse (1) verbunden ist. In Fig. 4 ist das Ventil in geschlossener Stellung gezeigt und in Fig. 3 in geöffneter Stellung.

Die erfindungsgemäßen Pumpenventile sind ebenfalls im Upflow-Betrieb einsetzbar. Zwei verschiedene Ausgestaltungen sind in den Fig. 6 und 7 sowie in den Fig. 8 bis 9 beschrieben.

Eine Ausgestaltung für Upflow-Pumpenventile ist wie aus den Fig. 6 und 7 ersichtlich aufgebaut.

Das Ventil (10) umfasst ein Ventilgehäuse (1), in dem ein Ventilsitz (5) und ein axial relativ zu dem Ventilsitz (5) beweglicher Schließkörper vorgesehen sind. Der Schließkörper besteht aus einer Platte (2a) sowie einer axial mit der Platte (2a) fest verbundenen Ventilstange (2d). Der Schließkörper (2a, 2d) ist an wenigstens zwei axial voneinander beabstandeten Einspannpunkten (30, 40) über jeweils drei aus flexiblem Material bestehende Elemente (3a, 3b, 4a, 4b (3c und 4c nicht gezeigt)) radial mit dem Ventilgehäuse (1) verbunden. Die zwei axial voneinander beabstandeten Einspannpunkte (30, 40) sind axial oberhalb des Ventilsitzes (5) in dem Ventilgehäuse (1) angeordnet. In Fig. 6 ist das Ventil in geschlossener Stellung gezeigt und in Fig. 7 in geöffneter Stellung.

Eine andere Ausgestaltung für Upflow-Pumpenventile ist wie aus den Fig. 8 und 9 ersichtlich aufgebaut.

Das Ventil (10) umfasst ein Ventilgehäuse (1), in dem ein Ventilsitz (5) und ein axial relativ zu dem Ventilsitz (5) beweglicher Schließkörper vorgesehen sind. Der Schließkörper besteht aus einer Platte (2a) sowie einer axial mit der Platte (2a) fest verbundenen Ventilstange (2d). Der Schließkörper (2a, 2d) ist an wenigstens zwei axial voneinander beabstandeten Einspannpunkten (30, 40) über jeweils drei aus flexiblem Material bestehende Elemente (3a, 3b, 4a, 4b (3c und 4c nicht gezeigt)) radial mit dem Ventilgehäuse (1) verbunden. Die zwei axial voneinander beabstandeten Einspannpunkte (30, 40) sind axial derart an der Ventilstange (2d) angeordnet, so dass einer der Einspannpunkte (30) oberhalb des Ventilsitzes (5) radial mit dem Ventilgehäuse (1) verbunden ist und der andere Einspannpunkt (40) unterhalb des Ventilsitzes (5) radial mit dem Ventilgehäuse (1) verbunden ist. In Fig. 8 ist das Ventil in geschlossener Stellung gezeigt und in Fig. 9 in geöffneter Stellung.

In Fig. 10 ist ein weiteres Upflow-Pumpenventil gezeigt. Die Merkmale dieses Ventils entsprechen den vorhergehenden Ausgestaltungen, wobei der Schließkörper bei dieser Ausgestaltung aus einem Kugelsegment (2b) sowie einer axial mit dem Kugelsegment (2b) fest verbundenen Ventilstange (2d) besteht. Es ist ebenso vorgesehen, dass das Kugelsegment durch beispielsweise einen Kegel ersetzbar ist.

In Fig. 11 ist ein weiteres Upflow-Pumpenventil gezeigt. Die Merkmale dieses Ventils entsprechen den vorhergehenden Ausgestaltungen, wobei der Schließkörper bei dieser Ausgestaltung eine Kugel (2c) ist. Der Schließkörper ist an zwei axial voneinander beabstandeten Einspannpunkten über jeweils drei aus flexiblem Material bestehende Elemente (3a, 3b (3c nicht gezeigt), 4a, 4b (4c nicht gezeigt)) radial mit dem Ventilgehäuse (1) verbunden. Die aus flexiblem Material bestehenden Elemente (3a, 4a; 3b, 4b; 3c, 4c (nicht gezeigt) sind zwischen den jeweiligen axial voneinander beabstandeten Einspannpunkten miteinander verbunden bzw. sind einteilig hergestellt. Der Ventilsitz (5) weist eine Zentrierhilfe (6) auf.

In Fig. 12 ist ein weiteres Upflow-Pumpenventil gezeigt. Die Merkmale dieses Ventils entsprechen den vorhergehenden Ausgestaltungen, wobei der Schließkörper bei dieser Ausgestaltung eine Kugel (2c) ist. Der Schließkörper ist an zwei axial voneinander beabstandeten Einspannpunkten über jeweils drei aus flexiblem Material bestehende Elemente (3a, 3b (3c nicht gezeigt), 4a, 4b (4c nicht gezeigt)) radial mit dem Ventilgehäuse (1) verbunden. Die aus flexiblem Material bestehenden Elemente (3a; 3b; 4a; 4b; (3c, 4c nicht gezeigt)) sind nicht miteinander verbunden. Der Ventilsitz (5) weist eine Zentrierhilfe (6) auf.

In Fig. 13 ist ein Upflow-Pumpenventil im geschlossenen Zustand gezeigt, wobei der Schließkörper aus einer Platte (2e) sowie einer axial mit der Platte (2e) fest verbundenen Ventilstange (2d) besteht. Die anderen Merkmale dieses Ventils entsprechen den vorhergehenden Ausgestaltungen.

In Fig. 14 ist ein erfindungsgemäßes Ventil, hier beispielhaft als Downflow-Pumpenventil dargestellt, gezeigt, wobei in dem Ventilgehäuse (1) ein dreiteiliger Einsatz (1a, 1b, 1c) angeordnet ist. In dem Ventilgehäuse (1) ist ein Ventilsitz (5) und ein axial relativ zu dem Ventilsitz (5) beweglicher Schließkörper vorgesehen. Der Schließkörper besteht aus einem Kegel (2a) sowie einer axial mit dem Kegel (2a) fest verbundenen Ventilstange (2d). Der Schließkörper (2a, 2d) ist an wenigstens zwei axial voneinander beabstandeten Einspannpunkten (30, 40) über jeweils drei aus flexiblem Material bestehende Elemente (3a, 3b, 4a, 4b (3c und 4c nicht gezeigt)) radial mit dem Einsatz (1a, 1b, 1c) verbunden; hier verspannt bzw. eingespannt zwischen den Teilen des Einsatzes (1a, 1b; 1b, 1c). Das Ventilgehäuse (1) ist auf der Innenseite glatt ausgebildet, d.h. es weist keine Mittel zum Einspannen/Verspannen der aus flexiblem Material bestehenden Elemente auf. Der Einsatz (1a, 1b, 1c) ist vertikal nicht beweglich in dem Ventilgehäuse (1) angeordnet. Die zwei axial voneinander beabstandeten Einspannpunkte (30, 40) sind axial unterhalb des Ventilsitzes (5) in dem Ventilgehäuse (1) angeordnet. Das Ventil ist in geschlossener Stellung gezeigt.

In Fig. 15 ist ein Ventil, umfassend ein Ventilgehäuse (1), in dem ein Ventilsitz (5) und ein axial relativ zu dem Ventilsitz (5) beweglicher Schließkörper (2a, 2d) vorgesehen sind, gezeigt. Der Schließkörper besteht aus einem Kegel (2a) sowie einer axial mit dem Kegel (2a) fest verbundenen Ventilstange (2d) und ist über ein aus flexiblem Material bestehendes Element (3a) radial mit dem Ventilgehäuse (1) verbunden, hier verspannt. Der Schließkörper ist in dem Einspannpunkt (40) fest mit dem einen Element (3a) verbunden.

In Fig. 16 ist eine mögliche Verbindung des Schließkörpers (hier Ventilstange 2d) über drei aus flexiblem Material bestehende Elemente (3a, 3b, 3c) mit dem Ventilgehäuse (1) für alle vorgenannten Ausführungsbeispiele gezeigt. Die Elemente (3a, 3b, 3c) sind wie Speichen eines Wagenrades zwischen dem Schließkörper und dem Ventilgehäuse (1) angeordnet. An dem Schließkörper sind die einen Endbereiche der Elemente befestigt bzw. verbunden und die anderen Endbereiche sind mit dem Ventilgehäuse oder dem Einsatz befestigt bzw. verbunden. Die Verbindungen sind entweder endfest oder lösbar ausgebildet.

In Fig. 17 ist eine weitere mögliche Verbindung des Schließkörpers mit dem Ventilgehäuse (1) für alle vorgenannten Ausführungsbeispiele gezeigt. Die Elemente (3a, 3b, 3c) sind wie Speichen eines Wagenrades zwischen einem Innenring (3I) und einem Außenring (3A) angeordnet. Der Innenring (3I) ist an dem Schließkörper befestigt und der Außenring (3A) an dem Ventilgehäuse oder dem Einsatz. Die Verbindungen sind entweder endfest oder lösbar ausgebildet. Die Elemente (3a, 3b, 3c), der Innenring (3I) und der Außenring (3A) können einteilig oder mehrteilig ausgebildet bzw. hergestellt sein. Der Außenring (3A) kann weiterhin eine Dichtfunktion aufweisen.

## Patentansprüche

1. Ventil (10), umfassend ein Ventilgehäuse (1), in dem ein Ventilsitz (5) und ein axial relativ zu dem Ventilsitz (5) beweglicher Schließkörper (2) vorgesehen sind, wobei der Schließkörper (2) über wenigstens ein aus flexiblem Material bestehendes Element (3a) radial mit dem Ventilgehäuse (1) verbunden ist, wobei der Schließkörper (2; 2c; 2a, 2d; 2b, 2d; 2e, 2d) an wenigstens zwei axial voneinander beabstandeten Einspannpunkten (30, 40) über jeweils wenigstens ein aus flexiblem Material bestehendes Element (3a; 3a, 3b; 3a, 3b, 3c; 4a, 4b; 4a, 4b, 4c) radial mit dem Ventilgehäuse (1) verbunden ist, **dadurch gekennzeichnet, dass** der Schließkörper (2) aus einem Kegel (2a), einer Platte (2e) oder einem Kugelsegment (2b) sowie einer axial mit dem Kegel (2a), der Platte (2e) oder dem Kugelsegment (2b) fest verbundenen Ventilstange (2d) besteht und dass einer der wenigstens zwei axial voneinander beabstandeten Einspannpunkte (30) axial oberhalb und ein weiterer der wenigstens zwei axial voneinander beabstandeten Einspannpunkte (40) axial unterhalb des Ventilsitzes (5) in dem Ventilgehäuse (1) angeordnet ist.

2. Ventil (10) gemäß Anspruch 1, **dadurch gekennzeichnet, dass** der Schließkörper (2) über wenigstens zwei, vorzugsweise wenigstens drei, aus flexiblem Material bestehende Elemente (3a, 3b, 3c) radial mit dem Ventilgehäuse (1) verbunden ist.

3. Ventil (10) gemäß Anspruch 1, **dadurch gekennzeichnet, dass** die wenigstens zwei axial voneinander beabstandeten Einspannpunkte (30, 40) axial oberhalb oder axial unterhalb des Ventilsitzes (5) in dem Ventilgehäuse (1) angeordnet sind.

4. Ventil (10) gemäß Anspruch 1 oder Anspruch 2, **dadurch gekennzeichnet, dass** das wenigstens eine aus flexiblem Material bestehende Element (3a; 3a, 3b; 3a, 3b, 3c; 4a, 4b; 4a, 4b, 4c) aus einem flexiblem Material besteht, ausgewählt aus der Gruppe bestehend aus Metallblechen, Elastomerformteilen, Elastomerflachmaterialien, Plastomeren und Polytetrafluorethylen (PTFE), und/oder aus einem bei Energiebeaufschlagung kontrahierenden oder expandierenden Material besteht.

5. Ventil (10) gemäß Anspruch 2, **dadurch gekennzeichnet, dass** die aus flexiblem Material bestehenden Elemente (3a, 3b; 3a, 3b, 3c; 4a, 4b; 4a, 4b, 4c) einteilig hergestellt sind.

6. Ventil (10) gemäß Anspruch 1, **dadurch gekennzeichnet, dass** der Schließkörper (2) und das wenigstens eine aus flexiblem Material bestehende Element (3a; 3a, 3b; 3a, 3b, 3c; 3a, 3b, 4a, 4b; 3a, 3b, 3c, 4a, 4b, 4c) einteilig hergestellt sind.

7. Ventil (10) gemäß einem der vorhergehenden Ansprüche, **dadurch gekennzeichnet, dass** das Ventil ein Pumpenventil, insbesondere ein Pumpenventil zur Förderung abrasiver und/oder heterogener Mischungen, ist.

8. Pumpe (20) mit einem Pumpenventil gemäß Anspruch 7.

## Claims

1. Valve (10), comprising a valve housing (1) in which a valve seat (5) and a closing body (2) that is movable in the axial direction, relative to the valve seat (5), are provided, wherein the closing body (2) is radially connected to the valve housing (1) by means of at least one element (3a) consisting of flexible material, wherein the closing body (2; 2c; 2a, 2d; 2b, 2d; 2e, 2d) is radially connected to the valve housing (1) at at least two axially mutually spaced clamping points (30, 40), by means of at least one element (3a; 3a, 3b; 3a, 3b, 3c; 4a, 4b; 4a, 4b, 4c), consisting of flexible material, in each case, **characterized in that** the closing body (2) consists of a cone (2a), a plate (2e) or a spherical segment (2b), and a valve rod (2d) that is axially rigidly connected to the cone (2a), the plate (2e) or the spherical segment (2b), and **in that** one of the at least two axially mutually spaced clamping points (30) is arranged axially above, and a further of the at least two axially mutually spaced clamping points (40) is arranged axially below, the valve seat (5) in the valve housing (1).

2. Valve (10) according to claim 1, **characterized in that** the closing body (2) is radially connected to the valve housing (1) by means of at least two, preferably at least three, elements (3a, 3b, 3c) that consist of flexible material

3. Valve (10) according to claim 1, **characterized in that** the at least two axially mutually spaced clamping points (30, 40) are arranged axially above or axially below the valve seat (5) in the valve housing (1).

4. Valve (10) according to claim 1 or claim 2, **characterized in that** the at least one element (3a; 3a, 3b; 3a, 3b, 3c; 4a, 4b; 4a, 4b, 4c) consisting of flexible material consists of a flexible material selected from the group consisting of metal sheets, elastomer moldings, elastomer sheet materials, plastomers and polytetrafluoroethylene (PTFE), and/or consists of a material that contracts or expands upon energy being applied.

5. Valve (10) according to claim 2, **characterized in that** the elements (3a, 3b; 3a, 3b, 3c; 4a, 4b; 4a, 4b, 4c) consisting of flexible material are manufactured in one piece.

6. Valve (10) according to claim 1, **characterized in that** the closing body (2) and the at least one element (3a; 3a, 3b; 3a, 3b, 3c; 3a, 3b, 4a, 4b; 3a, 3b, 3c, 4a, 4b, 4c) consisting of flexible material are manufactured in one piece.

7. Valve (10) according to any of the preceding claims, **characterized in that** the valve is a pump valve, in particular a pump valve for delivering abrasive and/or heterogenous mixtures.

8. Pump (20) comprising a pump valve according to claim 7.

## Revendications

1. Valve (10) comprenant un boîtier de valve (1) dans lequel sont prévus un siège de valve (5) et un corps de fermeture (2) mobile axialement par rapport au siège de valve (5), le corps de fermeture (2) étant relié radialement au boîtier de valve (1) par au moins un élément (3a) réalisé en matériau flexible, le corps de fermeture (2 ; 2c ; 2a, 2d ; 2b, 2d ; 2d, 2d) étant relié radialement au boîtier de valve (1), en au moins deux points de serrage (30, 40) espacés axialement l'un de l'autre, par l'intermédiaire d'au moins un élément (3a ; 3a, 3b ; 3a, 3b, 3c ; 4a, 4b ; 4a, 4b, 4c) réalisé en matériau flexible, **caractérisée en ce que** le corps de fermeture (2) comprend un cône (2a), une plaque (2e) ou un segment de sphère (2b) ainsi qu'une tige de valve (2d) fixée axialement au cône (2a), à la plaque (2e) ou au segment de sphère (2b), et **en ce que** l'un des au moins deux points de serrage (30) espacés axialement l'un de l'autre est disposé dans le boîtier de valve (1) axialement au-dessus du siège de valve (5) et un autre des au moins deux points de serrage (40) espacés axialement est disposé axialement en dessous dudit siège de valve.

2. Valve (10) selon la revendication 1, **caractérisée en ce que** le corps de fermeture (2) est relié radialement au boîtier de valve (1) par au moins deux, de préférence au moins trois, éléments (3a, 3b, 3c) réalisés en matériau flexible.

3. Valve (10) selon la revendication 1, **caractérisée en ce que** les au moins deux points de serrage (30, 40) espacés axialement l'un de l'autre sont disposés dans le boîtier de valve (1) axialement au-dessus ou en dessous du siège de valve (5).

4. Valve (10) selon la revendication 1 ou la revendication 2, **caractérisée en ce que** l'au moins un élément (3a ; 3a, 3b ; 3a, 3b, 3c ; 4a, 4b ; 4a, 4b, 4c) réalisé dans un matériau flexible est constitué d'un matériau flexible choisi dans le groupe constitué des tôles métalliques, des pièces moulées en élastomère, des matériaux plats élastomères, des plastomères et du polytétrafluoroéthylène (PTFE), et/ou d'un matériau qui se contracte ou s'allonge quand il est soumis à une énergie.

5. Valve (10) selon la revendication 2, **caractérisée en ce que** les éléments (3a, 3b ; 3a, 3b, 3c ; 4a, 4b ; 4a, 4b, 4c) réalisés en matériau flexible sont fabriqués d'un seul tenant.

6. Valve (10) selon la revendication 1, **caractérisée en ce que** le corps de fermeture (2) et l'au moins un élément (3a ; 3a, 3b ; 3a, 3b, 3c ; 3a, 3b, 4a, 4b ; 3a, 3b, 3c, 4a, 4b, 4c) réalisé en matériau flexible sont réalisés d'un seul tenant.

7. Valve (10) selon l'une des revendications précédentes, **caractérisée en ce que** la valve est une valve de pompe, en particulier une valve de pompe pour transporter des mélanges abrasifs et/ou hétérogènes.

8. Pompe (20) avec valve de pompe selon la revendication 7.
